# EUROPÄISCHE PATENTSCHRIFT

(11) **EP 2 625 356 B1**
(45) Veröffentlichungstag und Bekanntmachung des Hinweises auf die Patenterteilung: **21.06.2017**
(21) Anmeldenummer: 11778512.1
(22) Anmeldetag: 08.10.2011
(51) Int. Cl.: E05B 47/02, E05B 63/14, H01F 7/16, E05G 1/04

(54) **VERRIEGELUNGSVORRICHTUNG MIT WENIGSTENS ZWEI VERRIEGELUNGSBOLZEN**
LOCKING DEVICE WITH AT LEAST TWO LOCKING BOLTS
DISPOSITIF DE VERROUILLAGE COMPORTANT AU MOINS DEUX GOUPILLES DE VERROUILLAGE

(30) Priorität: 09.10.2010 DE 202010014166 U
(43) Veröffentlichungstag der Anmeldung: 14.08.2013
(73) Patentinhaber: Lock Your World GmbH & Co. KG, 63619 Bad Orb (DE)
(72) Erfinder: MEISEL, Thilo, 64285 Darmstadt (DE)
(74) Vertreter: Hoeger, Stellrecht & Partner Patentanwälte mbB
(86) Internationale Anmeldenummer: PCT/EP2011/005036
(87) Internationale Veröffentlichungsnummer: WO 2012/045474

(56) Entgegenhaltungen:
- GB-A- 1 258 379
- US-A- 3 378 031
- US-A- 3 713 059
- US-A- 4 503 411
- US-A1- 2001 040 492
- US-B1- 6 588 243

## Beschreibung

### Stand der Technik

Verriegelungsvorrichtungen arbeiten typischer Weise mit wenigstens einem Verriegelungsbolzen, der mittels wenigstens eines Hubmagneten betätigbar ist. Monostabile Hubmagnete üblicher Bauart bieten die Möglichkeit, dass über einen Anker ein Verriegelungsbolzen betätigt werden kann. Über den Verriegelungsbolzen können dann Verschlüsse jeder Art blockiert werden und somit gegen Öffnen gesichert werden. Dabei wird üblicher Weise über eine Rückstellfeder der Anker und damit der Verriegelungsbolzen im stromlosen Zustand in der Stellung "geschlossen" gehalten. Da grundsätzlich jedes Feder-Masse-System über einen Impuls in Schwingung gebracht werden kann, besteht bei solchen Verschlusssystemen immer die Gefahr, dass über einen externen Impuls (Schlag) der Anker in Schwingung gerät und damit die Blockierung außer Kraft gesetzt werden kann. Durch die Verwendung mehrerer entsprechend parallel oder im Winkel versetzt zueinander angeordneter Hubmagnete kann dieses Problem grundsätzlich behoben werden, dies führt aber zwangsläufig zu einem größeren Stromverbrauch beim Entriegeln.

Zentrales Ziel der Erfindung ist es, eine Verriegelungsvorrichtung so zu realisieren, dass ein externer Impuls (Schlag) nicht zum Entriegeln der Verschlussbolzen führt. Zusätzliches Augenmerk wird auf eine geringe Stromaufnahme gelegt.

Aus der US 2001/0040492 A1 ist eine Verriegelungsvorrichtung mit den Merkmalen des Oberbegriffs des Patentanspruchs 1 bekannt. Bei dieser sind innerhalb einer Spule zwei Verschlussbolzen an zwei koaxial gegenläufig zueinander bewegbaren Ankern angeordnet. Eine zwischen beiden Ankern angeordnete Druckfeder drückt die Verschlussbolzen im stromlosen Zustand der Spule in ihre Verriegelungsposition. Beim Bestromen der Spule werden beide Verschlussbolzen durch die Anker gegen den Druck der Feder in eine Entriegelungsposition gefahren. Eine sehr ähnliche Verriegelungseinrichtung ist aus der US 6 588 243 B1 bekannt.

### Zugrunde liegendes Problem

Der Erfindung liegt das Problem zu Grunde, dass für eine hohe mechanische Verschlusskraft relativ schwere Verschlussbolzen eingesetzt werden müssen. Dies führt zu relativ großen Federkräften im Hubmagneten, die ihrerseits durch ein starkes Magnetfeld überwunden werden müssen. Der elektrische Energiebedarf ist in der Regel so hoch, dass batteriebetriebene Lösungen nur sehr eingeschränkt genutzt werden können. Wird ein gewichtsoptimierter Verschlussbolzen gewählt und damit auch eine deutlich schwächere Feder, sind solche Lösungen sehr anfällig für externe Impulse (Schläge) von außen. Solche Impulse (Schläge) bringen das Feder-Masse-System in Schwingung und führen dazu, dass Verschlüsse sehr leicht und ohne Zerstörung überwunden werden können.

Um der Wirkung von Impulsen (Schlägen) auf ein Feder-Masse-System zu begegnen, ist die Anordnung von zwei oder mehreren, nebeneinander oder im Winkel versetzt zueinander angeordneten jeweils monostabilen Hubmagneten üblich. Dabei wird die Anordnung so gewählt, dass der Impuls immer nur auf eine Funktionsachse wirken kann (90° Anordnung) oder die Wirkung des Impulses aufgehoben wird. Nachteilig bei der Verwendung mehrerer monostabiler Hubmagnete ist jedoch der damit verbundene hohe Strombedarf.

### Problemlösung

Mit der in den Patentansprüchen angegebenen Erfindung wird erreicht, dass eine Verriegelungsvorrichtung mittels eines monostabilen Hubmagneten zwei um 180° gegensätzlich zueinander angeordnete Verschlussbolzen betätigen kann. Dazu werden zwei um 180° gegensätzlich angeordnete Anker innerhalb einer Spule betrieben. Die Rückstellkraft der beiden Anker wird mit nur einer Feder realisiert, die sich im Inneren der Spule zwischen den beiden Ankern befindet. Dadurch, dass die beiden Anker mit ihren einander zugewandten Enden formschlüssig ineinander greifen, wobei einer der Anker eine V-förmige oder Kegelstumpfförmige Aussparung aufweist, in die ein komplementär geformter Vorsprung am anderen Anker eingreift, wird der zwischen ihnen vorhandenen Luftspalt im stromlosen Zustand minimiert, was eine deutlich stärkere Anzugskraft zur Folge hat. Dadurch wird der Wirkungsgrad verbessert oder mit anderen Worten der Energieaufwand für die Betätigung des Doppelhubmagneten minimiert.

Die Verschlussbolzen sind an den Enden der Anker angebracht und an ihrem Kopfende angeschrägt. Durch diese Schräge kann der Verschluss auch ohne elektrische Energiezufuhr durch einen manuellen Schließvorgang blockiert werden.

Der Arbeitshub des Hubmagneten verteilt sich gleichmäßig auf die beiden Anker. Die sich ergebende Verschlussmasse ändert sich bezüglich des Energieaufwands gegenüber einer Ein-Ankerlösung nicht, sie wird lediglich auf zwei Punkte hälftig verteilt. Vorteil dieser Lösung ist die Unempfindlichkeit gegenüber externen Impulsen (Schlägen). Da die beiden Anker mit Ihren Verschlussbolzen um 180° versetzt zueinander angeordnet sind und von ihrer Arbeitsweise gegensätzlich wirken, wirkt ein Impuls in Richtung einer Arbeitsachse gleichzeitig immer auch gegensätzlich auf die andere, so dass der Impuls neutralisiert wird.

Ein praktisches Anwendungsbeispiel für die vorliegende Erfindung ist der Verschlussdeckel eines Rohrtresors. Hierbei wird der Doppelhubmagnet so angeordnet, dass die beiden Verschlussbolzen um 180° gegeneinander versetzt aus dem Verschlussdeckel ragen. Die Schrägen der Verschlussbolzen zeigen nach Innen. Dies bewirkt, dass wenn der Verschlussdeckel in das Rohr gesetzt wird, die Verschlussbolzen gegen die Federkraft nach Innen gedrückt werden und in der Endposition in eine Nut innerhalb des Rohrs springen. Der Verschlussdeckel ist nun blockiert und lässt sich nur noch nach Anlegen einer Spannungsquelle an den Doppelhubmagneten öffnen.

Nachfolgend wird ein Ausführungsbeispiel der Erfindung anhand der Zeichnung erläutert.

Es zeigt:
- Fig. 1A und: 1B eine Verriegelungsvorrichtung mit einem Doppelhubmagneten und zwei Verschlussbolzen in zwei um 90° versetzten Seitenansichten und
- Fig. 2: den Doppelhubmagneten gemäß Fig. 1 in einem Anwendungsbeispiel in einem Rohrtresor

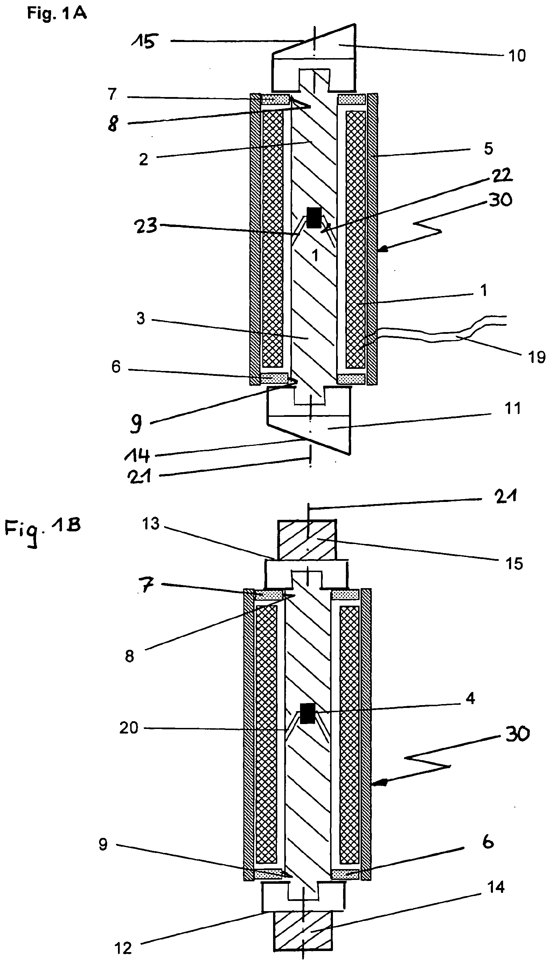

Fig. 1 zeigt, dass sich bei einer insgesamt mit 30 bezeichneten Verschlussvorrichtung innerhalb einer Spule 1 zwei Anker 2 und 3 befinden. Zwischen den Ankern 2 und 3 ist eine Druckfeder 4 so angeordnet, dass sich ihre Kraft gleichmäßig auf beide Anker 2 und 3 verteilt. Die beiden Anker 2 und 3 greifen im Inneren der Spule 1 V-förmig oder Kegelstumpfförmig ineinander, um einen zwischen ihnen vorhandenen Luftspalt 20 im stromlosen Zustand zu minimieren, was eine deutlich stärkere Anzugskraft zur Folge hat. Dadurch wird der Wirkungsgrad verbessert oder mit anderen Worten der Energieaufwand für die Betätigung des Doppelhubmagneten minimiert.

Über ein Anschlusskabel 19 wird die Spule 1 mit Strom versorgt.

Ein Rahmen 5, der die Spule 1 umgibt und für den Magnetfeldfluss sorgt, entspricht in seiner Bauart einem Rahmen, wie er auch für einen üblichen monostabilen Hubmagneten verwendet wird. Im Gegensatz zu einem üblichen Rahmen sind dort aber in zwei am Rahmen 5 angeordneten und mit diesem verbundenen Jochscheiben 6 und 7 Bohrungen 8 und 9 vorgesehen, während eine solche Bohrung sonst nur in einer Jochscheibe an einem Ende des Rahmens vorgesehen ist.

Am Ende der beiden Anker 2 und 3 sind Verschlussbolzen 10 und 11 angebracht. Damit die Verschlussbolzen 10 und 11 nicht herausfallen können, sind Anschläge 12 und 13 an den Verschlussbolzen 10 und 11 vorgesehen.

Die Druckfeder 4 stellt die Rückstellkraft für die beiden Anker 2 und 3 bereit. Durch diese Anordnung wird erreicht, dass sich die Rückstellkraft der Druckfeder 4 gleichmäßig auf beide Anker 2 und 3 verteilt und sich zusätzlich eine Luftspaltreduzierung zwischen den Jochscheiben 6 und 7 und den Verschlussbolzen 10 und 11 ergibt.
Weiterhin sind Schrägen 14 und 15 an den freien Enden der Verschlussbolzen 10 und 11 vorgesehen, damit das Schließen ohne Aktivierung des Hubmagneten rein durch manuelles Schließen gegen die Kraft der Druckfeder 4 möglich ist.

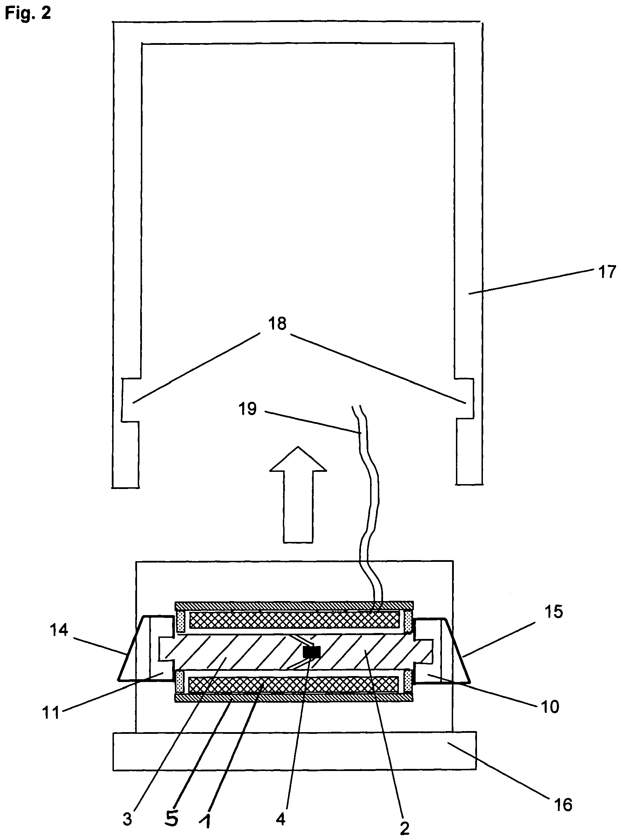

Fig. 2 zeigt, wie der Doppelhubmagnet in einem Verschlussdeckel 16 eines Rohrtresors 17 eingebaut ist. Die Schrägen 14 und 15 am Kopfende der Anker 2 und 3 werden beim manuellen Einführen des Verschlussdeckels 16 in den Rohrtresor 17 gegen die Kraft der Druckfeder 4 zusammengedrückt und springen dann nach erreichen der Endposition in eine an der Innenwand des Rohrtresors 17 vorgesehene Nut 18.

Wird nun über das Anschlusskabel 19 ein elektrischer Strom an die Spule 1 angelegt, werden die beiden Anker 2 und 3 nach innen gezogen und ziehen dadurch die Verschlussbolzen 10 und 11 aus der Nut 18 heraus. Nun kann der Verschlussdeckel 16 in diesem entriegelten Zustand aus dem Rohrtresor 17 herausgezogen werden.

### Bezugszeichenliste

- 1: Spule
- 2: (erster) Anker
- 3: (zweiter) Anker
- 4: Druckfeder
- 5: Rahmen
- 6: Jochscheibe
- 7: Jochscheibe
- 8: Bohrung (in 7)
- 9: Bohrung (in 8)
- 10: Verschlussbolzen
- 11: Verschlussbolzen
- 12: Anschlag
- 13: Anschlag
- 14: Schräge (an 11)
- 15: Schräge (an 10)
- 16: Verschlussdeckel
- 17: Rohrtresor
- 18: Nut
- 19: Anschlusskabel (an 1)
- 20: Luftspalt (zwischen 2 und 3)
- 21: Achse (von 2 und 3)
- 22: Aussparung (an 2)
- 23: Vorsprung (an 3)
- 30: Verschlussvorrichtung

## Patentansprüche

1. Verriegelungsvorrichtung (30) mit wenigstens einem elektrisch betätigbaren Doppelhubmagneten, der von wenigstens zwei mit wenigstens zwei Verschlussbolzen (10, 11) zusammenwirkenden Ankern (2, 3) und wenigstens einer die beiden Anker (2, 3) zumindest teilweise umgebenden Spule (1) gebildet wird, wobei die beiden Anker (2, 3) auf einer gemeinsamen Achse (21) angeordnet und gegenläufig zueinander verschiebbar sind, wobei die beiden Anker (2, 3) durch wenigstens eine Feder (4) betätigbar sind, die als Druckfeder ausgebildet und zwischen den beiden Ankern (2, 3) angeordnet ist und wobei die Verschlussbolzen (10, 11) an ihren Enden mit Schrägen (14, 15) versehen sind, die eine manuelle Verriegelung ermöglichen, **dadurch gekennzeichnet, dass** die beiden Anker (2, 3) mit ihren einander zugewandten Enden formschlüssig ineinander greifen, wobei einer der Anker (2) eine V-förmige oder Kegelstumpfförmige Aussparung (22) aufweist, in die ein komplementär geformter Vorsprung (23) am anderen Anker (3) eingreift.

2. Verriegelungsvorrichtung nach einem der vorhergehenden Ansprüche, **dadurch gekennzeichnet, dass** im stromlosen Zustand der Spule (1) zwischen beiden Ankern (2, 3) ein minimaler Luftspalt (20) vorhanden ist.

3. Verwendung einer Verriegelungsvorrichtung (30) nach einem der vorhergehenden Ansprüche für einen Verschlussdeckel (16) eines Tresors (17).

## Claims

1. Locking device (30) comprising at least one electrically activated double-acting solenoid which is formed from at least two armatures (2, 3) engaging with at least two locking bolts (10, 11), and at least one coil (1) surrounding the two armatures (2, 3) at least partially, wherein the two armatures (2,3) are arranged on a common axis (21) and can move in opposite directions, wherein both armatures (2, 3) can be activated by at least one spring (4) which is formed as a compression spring and is arranged between the two armatures (2, 3), and wherein the locking bolts (10, 11) are provided with chamfers (14, 15) at the ends thereof which allow manual locking,
**characterised in that** the two armatures (2, 3) engage in one another in a form-fitting manner with the ends thereof that are facing one another, wherein one of the armatures (2) has a V-shaped or truncated-cone-shaped recess (22) in which a complementary shaped protrusion (23) on the other armature (3) engages.

2. Locking device according to one of the preceding claims, **characterised in that** a minimal air gap (20) exists between the armatures (2, 3) in the current-free state of the coil (1).

3. Application of a locking device (30) according to one of the preceding claims for a closure lid (16) of a safe (17).

## Revendications

1. Dispositif de verrouillage (30) avec au moins un aimant à double course qui peut être actionné électriquement et qui est formé par au moins deux armatures (2, 3) coopérant avec au moins deux goupilles de fermeture (10, 11) et par au moins une bobine (1) entourant au moins partiellement les deux armatures (2, 3), dans lequel les deux armatures (2, 3) sont agencées sur un axe commun (21) et peuvent être déplacées en sens contraire l'une par rapport à l'autre, dans lequel les deux armatures (2, 3) peuvent être actionnées par au moins un ressort (4), qui est conçu comme un ressort de pression et qui est agencé entre les deux armatures (2, 3) et dans lequel les goupilles de fermeture (10, 11) sont munies à leurs extrémités de biseaux (14, 15), qui permettent un verrouillage manuel,
**caractérisé en ce que** les deux armatures (2, 3) viennent en prise l'une avec l'autre par complémentarité de forme par leurs extrémités tournées les unes vers les autres, dans lequel une des armatures (2) présente un évidement (22) en forme de V ou en forme de cône tronqué, avec lequel une partie faisant saillie (23) formée de manière complémentaire vient en prise au niveau de l'autre armature (3).

2. Dispositif de verrouillage selon l'une des revendications précédentes, **caractérisé en ce que**, lorsque la bobine (1) est à l'état sans courant, une fente d'air (20) minimale existe entre les deux armatures (2, 3).

3. Utilisation d'un dispositif de verrouillage (30) selon l'une des revendications précédentes pour un couvercle de fermeture (16) d'un coffre-fort (17).
